# EUROPEAN PATENT APPLICATION

(11) **EP 4 459 759 A1**
(43) Date of publication of application: **06.11.2024**
(21) Application number: 22922822.6
(22) Date of filing: 28.01.2022
(51) Int. Cl.: H01M 50/172

(54) **BATTERY CELL, BATTERY, ELECTRIC DEVICE, AND MANUFACTURING METHOD AND DEVICE FOR BATTERY CELL**

(71) Applicant: Contemporary Amperex Technology Co., Limited, Ningde, Fujian 352100 (CN)
(72) Inventor: GU, Hui, Ningde, Fujian 352100 (CN); LIU, Chao, Ningde, Fujian 352100 (CN); YU, Wenjie, Ningde, Fujian 352100 (CN); CHI, Qingkui, Ningde, Fujian 352100 (CN); JIN, Haizu, Ningde, Fujian 352100 (CN)
(74) Representative: Gong, Jinping
(86) International application number: PCT/CN2022/074773
(87) International publication number: WO 2023/141982

(57) **Abstract**

Embodiments of the present application provide a battery cell, a battery, an electrical device, and a method and device for manufacturing a battery cell, which belong to the technical field of batteries. The battery cell includes a shell, an electrode assembly and a current collecting member. The shell has a wall portion located at one end of the shell in a first direction. The electrode assembly is accommodated in the shell and provided with a tab. The current collecting member is accommodated in the shell, and is configured to be connected to the wall portion and the tab to implement an electrical connection between the wall portion and the tab. A protrusion is provided on a side of the current collecting member facing the wall portion, and the wall portion is provided with a recess configured to accommodate at least a part of the protrusion to position the current collecting member. Such a structure can improve the efficiency of assembling the current collecting member and the wall portion. Moreover, the mating between the protrusion and the recess can limit the relative movement between the current collecting member and the wall portion, improve the connection stability between the current collecting member and the wall portion, and thus improve the reliability of the electrical connection between the current collecting member and the wall portion, thereby effectively prolonging the service life of the battery cell.

## Description

### TECHNICAL FIELD

The present application relates to the technical field of batteries, and specifically, to a battery cell, a battery, an electrical device, and a method and device for manufacturing a battery cell.

### BACKGROUND

With the development of new energy technology, batteries are used more and more widely, for example, in mobile phones, laptops, electric motorcycles, electric vehicles, electric planes, electric ships, electric toy cars, electric toy ships, electric toy planes and electric tools.

In a battery cell, it is necessary to consider both the safety of the battery cell and the performance of the battery cell, such as the service life of the battery cell. Therefore, how to prolong the service life of the battery cell is an urgent technical problem to be solved in the battery technology.

### SUMMARY OF THE INVENTION

Embodiments of the present application provides a battery cell, a battery, an electrical device, and a method and device for manufacturing a battery cell, which can effectively prolong the service life of the battery cell.

In a first aspect, an embodiment of the present application provides a battery cell, including: a shell having a wall portion located at one end of the shell in a first direction; an electrode assembly accommodated in the shell and provided with a tab; and a current collecting member accommodated in the shell and located on a side of the electrode assembly facing the wall portion in the first direction, the current collecting member being configured to be connected to the wall portion and the tab to implement an electrical connection between the wall portion and the tab; wherein a protrusion is provided on a side of the current collecting member facing the wall portion, and the wall portion is provided with a recess configured to accommodate at least a part of the protrusion to position the current collecting member.

In the above technical solution, the protrusion is provided on the current collecting member, the recess is provided on the wall portion, and the protrusion is accommodated in the recess such that the current collecting member and the wall portion can be positioned. The efficiency of assembling the current collecting member and the wall portion can be improved. Moreover, the mating between the protrusion and the recess can limit the relative movement between the current collecting member and the wall portion, improve the connection stability between the current collecting member and the wall portion, and thus improve the reliability of the electrical connection between the current collecting member and the wall portion, thereby effectively prolonging the service life of the battery cell.

In some embodiments, the recess is a through hole penetrating the wall portion in the first direction. The recess is of a through hole structure arranged on the wall portion, so that the forming of the recess is facilitated, and the mating condition between the protrusion and the recess can also be determined more directly, ensuring that the protrusion can accurately mate with the recess during assembly.

In some embodiments, the protrusion is welded to the wall portion. In this way, the fixed connection between the protrusion and wall portion is implemented, so that the protrusion is fixed to the wall portion, to maintain the relative position between the current collecting member and the wall portion, thereby implementing the electrical connection between the current collecting member and the wall portion. Since the recess is a through hole structure arranged on the wall portion, the welding condition between the protrusion and the wall portion can be intuitively known, and false welding is less likely to occur, thereby ensuring the firmness of the welding between the protrusion and the wall portion and further improving the reliability of the electrical connection between the current collecting member and the wall portion.

In some embodiments, the protrusion has an outer peripheral face facing a hole wall of the through hole, and a weld seam is formed between the outer peripheral face and the hole wall; and a weld mark formed by welding the protrusion to the wall portion covers the weld seam, and extends circumferentially along the weld seam. In this way, seam welding between the protrusion and the wall portion is implemented, the welding efficiency is high, and the firmness of the welding between the protrusion and the wall portion can be ensured. In addition, since the weld mark formed by welding the protrusion to the wall portion extends circumferentially along the weld seam and covers the weld seam, the gap between the outer peripheral face of the protrusion and the hole wall of the through hole is blocked, thereby implementing sealing between the protrusion and the wall portion and reducing the risk of liquid leakage due to the provision of the through hole in the wall portion.

In some embodiments, the wall portion has an outer surface facing away from the current collecting member in the first direction, and the through hole penetrates the outer surface; and an end face at one end of the protrusion facing away from the current collecting member is flush with the outer surface; or the end face at the end of the protrusion facing away from the current collecting member is closer to the electrode assembly than the outer surface.

In the above technical solution, the end face at the end of the protrusion facing away from the current collecting member may be flush with the outer surface, so that the welding effect and the sealing performance between the protrusion and the wall portion can be better achieved. The end face at the end of the protrusion facing away from the current collecting member may alternatively be closer to the electrode assembly than the outer surface, so that the end of the protrusion facing away from the current collecting member is located in the through hole, and the protrusion does not occupy the space outside the battery cell, reducing the overall volume of the battery cell.

In some embodiments, the wall portion has an inner surface facing the current collecting member in the first direction, the through hole penetrates the inner surface, and the current collecting member abuts against the inner surface. Such a structure not only increases the contact area between the current collecting member and the wall portion, thereby achieving large-area current flow between the current collecting member and the wall portion, but also improves the stability of the current collecting member inside the battery cell.

In some embodiments, the protrusion includes: an extension portion extending from the current collecting member into the through hole in the first direction; and a limiting portion connected to the extension portion, wherein a limiting gap is formed between the limiting portion and the current collecting member in the first direction, and is configured to accommodate at least a part of the wall portion to limit a movement of the current collecting member relative to the wall portion in the first direction. The extension portion extends into the through hole to limit the current collecting member in a direction perpendicular to the first direction. The at least a part of the wall portion is accommodated in the limiting gap formed between the limiting portion and the current collecting member, to limit the current collecting member in the first direction. In this way, the stability and firmness of the connection between the current collecting member and the wall portion are improved, and a reliable electrical connection between the current collecting member and the wall portion is implemented.

In some embodiments, the protrusion includes a plurality of limiting portions, which are distributed on the extension portion in a circumferential direction of the extension portion. The plurality of limiting portions can all provide the limiting function, further improving the stability and firmness of the connection between the current collecting member and the wall portion.

In some embodiments, the limiting portion is turnably connected to the extension portion, and the limiting portion is capable of being turned outwardly relative to the extension portion, such that the limiting gap is formed between the limiting portion and the current collecting member. Since the limiting portion is turnably connected to the extension portion, the limiting portion can be formed in place by turning, so that the structure is simple and the difficulty of assembling the current collecting member and the wall portion is reduced.

In some embodiments, a notch is formed at a connection position between the limiting portion and the extension portion to allow the limiting portion to be turned outwardly relative to the extension portion. The provision of the notch enables the limiting portion to be turned outwardly relative to the extension portion more easily.

In some embodiments, the limiting portion is welded to the wall portion. In this way, the fixed connection between the limiting portion and the wall portion is implemented, so that the limiting portion is fixed to the wall portion to implement the electrical connection between the current collecting member and the wall portion, thereby improving the stability and firmness of the connection between the current collecting member and the wall portion, ensuring stable current flow between the current collecting member and the wall portion, and implementing a more reliable electrical connection between the current collecting member and the wall portion.

In some embodiments, the battery cell further includes: a sealing member configured to seal the protrusion and the wall portion. The sealing member provides the function of sealing the protrusion and the wall portion, thereby reducing the risk of liquid leakage due to the provision of the through hole in the wall portion.

In some embodiments, the sealing member includes: a first sealing portion sleeving the extension portion and located in the through hole. The first sealing portion can effectively seal the gap between the outer peripheral face of the extension portion and the hole wall of the through hole.

In some embodiments, the sealing member further includes: a second sealing portion connected to the first sealing portion and extending in a circumferential direction of the first sealing portion, wherein the second sealing portion is at least partially located between the current collecting member and the wall portion in the first direction. The second sealing portion can effectively seal the gap between the current collecting member and the wall portion, further improving the sealing effect of the sealing member.

In some embodiments, the sealing member further includes: a third sealing portion connected to the first sealing portion and extending in the circumferential direction of the first sealing portion, wherein the third sealing portion is at least partially located between the limiting portion and the wall portion in the first direction. The third sealing portion can effectively seal the gap between the limiting portion and the wall portion, further improving the sealing effect of the sealing member.

In some embodiments, the limiting portion includes: a covering section connected to the extension portion, the covering section covering the third sealing portion in the first direction; and a connecting section connected to an end of the covering section facing away from the extension portion in a second direction, the connecting section as a whole extending beyond the third sealing portion, and the second direction being perpendicular to the first direction; wherein the connecting section abuts against the wall portion in the first direction. The connecting section of the limiting portion abuts against the wall portion in the first direction, to implement the electrical connection between the limiting portion and the wall portion, thereby implementing a reliable electrical connection between the current collecting member and the wall portion.

In some embodiments, the wall portion has a first pressure relief region, the current collecting member has a second pressure relief region, and the first pressure relief region and the second pressure relief region are configured to be opened when the pressure or temperature inside the battery cell reaches a threshold to relieve the pressure inside the battery cell; wherein the first pressure relief region and the second pressure relief region are arranged opposite to each other in the first direction. The first pressure relief region of the wall portion and the second pressure relief region of the current collecting member can both be opened to relieve pressure, ensuring that when the battery cell is subjected to thermal runaway, the internal emissions can be discharged to the outside of the battery cell in a timely manner through the second pressure relief region and the first pressure relief region in sequence, thereby ensuring the safety of the battery cell.

In some embodiments, the recess is arranged in the first pressure relief region, and the protrusion is arranged in the second pressure relief region. Since the at least a part of the protrusion is accommodated in the recess, and the recess and the protrusion are respectively arranged in the first pressure relief region and the second pressure relief region, such a structure enables the first pressure relief region and the second pressure relief region to be opened as a whole, thereby improving the pressure relief efficiency.

In some embodiments, a pressure relief area of the first pressure relief region is greater than a pressure relief area of the second pressure relief region. In this way, the outward opening of the second pressure relief region is further facilitated, reducing the influence of the region of the wall portion other than the first pressure relief region on the opening of the second pressure relief region, and ensuring that the second pressure relief region can be opened over a large area.

In some embodiments, the wall portion is provided with a first pressure relief groove which extends in a circumferential direction of the shell to define the first pressure relief region; and the current collecting member is provided with a second pressure relief groove which extends in the circumferential direction of the shell to define the second pressure relief region. The first pressure relief groove and the second pressure relief groove are provided on the wall portion to form the first pressure relief region and the second pressure relief region respectively, so that the implementation is simple and the forming and machining are easy.

In some embodiments, the first pressure relief groove and the second pressure relief groove are both circular grooves, and are coaxially arranged, and the diameter of the first pressure relief groove is greater than the diameter of the second pressure relief groove. Such a structure makes the pressure relief area of the first pressure relief region greater than the pressure relief area of the second pressure relief region, so that the outward opening of the second pressure relief region is further facilitated, reducing the influence of the region of the wall portion other than the first pressure relief region on the opening of the second pressure relief region, and ensuring that the second pressure relief region can be opened over a large area.

In some embodiments, the wall portion is provided with a plurality of third pressure relief grooves which are distributed at intervals around the first pressure relief region, the third pressure relief grooves being connected to the first pressure relief groove, and a third pressure relief region being formed between each two adjacent third pressure relief grooves in the circumferential direction of the shell. During pressure relief, the first pressure relief region and the plurality of third pressure relief regions on the wall portion can all be opened, increasing the pressure relief area of the pressure relief regions on the wall portion, thereby effectively improving the pressure relief efficiency.

In some embodiments, the current collecting member is provided with a plurality of fourth pressure relief grooves which are distributed at intervals around the second pressure relief region, the fourth pressure relief grooves being connected to the second pressure relief groove, and a fourth pressure relief region being formed between each two adjacent fourth pressure relief grooves in the circumferential direction of the shell; wherein the fourth pressure relief region and the third pressure relief region are arranged opposite to each other in the first direction. During the pressure relief, the second pressure relief region and the plurality of fourth pressure relief regions on the current collecting member can be opened, increasing the pressure relief area of the pressure relief regions on the current collecting member, thereby effectively improving the pressure relief efficiency.

In a second aspect, an embodiment of the present application provides a battery, including a battery cell according to any one of the embodiments in the first aspect, and a box configured to accommodate the battery cell.

In a third aspect, an embodiment of the present application provides an electrical device, including a battery according to any one of the embodiments in the second aspect.

In a fourth aspect, an embodiment of the present application provides a method for manufacturing a battery cell, the manufacturing method including: providing a shell having a wall portion located at one end of the shell in a first direction, the wall portion being provided with a recess; providing an electrode assembly having a tab; providing a current collecting member provided with a protrusion; connecting the electrode assembly to the tab; accommodating the current collecting member and the electrode assembly in the shell; and accommodating at least a part of the protrusion in the recess to position the current collecting member; wherein in the first direction, the current collecting member is located on a side of the electrode assembly facing the wall portion, and the protrusion is arranged on a side of the current collecting member facing the wall portion.

In a fifth aspect, an embodiment of the present application further provide a device for manufacturing a battery cell, the manufacturing device including: a first providing apparatus configured to provide a shell having a wall portion located at one end of the shell in a first direction, the wall portion being provided with a recess; a second providing apparatus configured to provide an electrode assembly having a tab; a third providing apparatus configured to provide a current collecting member provided with a protrusion; and an assembling apparatus configured to connect the current collecting member to the tab, further to accommodate the current collecting member and the electrode assembly in the shell, and further to accommodate at least a part of the protrusion in the recess to position the current collecting member; wherein in the first direction, the current collecting member is located on a side of the electrode assembly facing the wall portion, and the protrusion is arranged on a side of the current collecting member facing the wall portion.

### DESCRIPTION OF DRAWINGS

To more clearly describe the technical solutions of the embodiments of the present application, the drawings to be used in the embodiments will be briefly introduced below, and it should be understood that the following drawings only show some embodiments of the present application, and therefore should not be considered as limiting the scope of the present application. For those of ordinary skill in the art, other relevant drawings may also be obtained based on these drawings without involving any inventive effort.
Fig. 1 is a schematic structural diagram of a vehicle according to some embodiments of the present application;
Fig. 2 is an exploded view of a battery according to some embodiments of the present application;
Fig. 3 is a cross-sectional view of a battery cell according to some embodiments of the present application;
Fig. 4 is a partial view of the battery cell shown in Fig. 3;
Fig. 5 is a schematic diagram of the connection between a current collecting member and a wall portion shown in Fig. 4;
Fig. 6 is a partial view of a battery cell according to some other embodiments of the present application;
Fig. 7 is a schematic structural diagram of a current collecting member shown in Fig. 6 (after the limiting portion is turned relative to the extension portion);
Fig. 8 is a schematic structural diagram of the current collecting member shown in Fig. 6 (before the limiting portion is turned relative to the extension portion);
Fig. 9 is a partial enlarged view of portion A of the battery cell shown in Fig. 6;
Fig. 10 is an exploded view of a wall portion and a current collecting member according to some embodiments of the present application;
Fig. 11 is an assembly diagram of the wall portion and the current collecting member shown in Fig. 10;
Fig. 12 is an exploded view of a wall portion and a current collecting member according to some other embodiments of the present application;
Fig. 13 is a flowchart of a method for manufacturing a battery cell according to some embodiments of the present application; and
Fig. 14 is a schematic block diagram of a device for manufacturing a battery cell according to some embodiments of the present application.

List of reference signs: 1 - shell; 11 - housing; 12 - end cover; 13 - wall portion; 131 - recess; 131a - through hole; 1311 - inner surface; 1312 - outer surface; 132 - first pressure relief region; 133 - first pressure relief groove; 134 - third pressure relief groove; 135 - third pressure relief region; 2 - electrode assembly; 21 - tab; 3 - current collecting member; 31 - protrusion; 311 - extension portion; 3111 - split part; 312 - limiting portion; 3121 - covering section; 3122 - connecting section; 313 - notch; 32 - limiting gap; 33 - second pressure relief region; 34 - second pressure relief groove; 35 - fourth pressure relief groove; 36 - fourth pressure relief region; 4 - electrode terminal; 6 - sealing member; 61 - first sealing portion; 62 - second sealing portion; 63 - third sealing portion; 10 - battery cell; 20 - box; 201 - first part; 202 - second part; 100 - battery; 200 - controller; 300 - motor; 1000 - vehicle; 2000 - manufacturing device; 2100 - first providing apparatus; 2200 - second providing apparatus; 2300 - third providing apparatus; 2400 - assembling apparatus; Z - first direction; Y - second direction.

### DETAILED DESCRIPTION

In order to make the objects, technical solutions and advantages of embodiments of the present application clearer, the technical solutions in the embodiments of the present application will be clearly described below with reference to the drawings for the embodiments of the present application. Apparently, the described embodiments are some of, rather than all of, the embodiments of the present application. All the other embodiments obtained by a person of ordinary skill in the art based on the embodiments of the present application without any creative effort shall fall within the scope of protection of the present application.

Unless otherwise defined, all technical and scientific terms used in the present application have the same meanings as those commonly understood by those skilled in the art to which the present application belongs. The terms used in the specification of the present application are merely for the purpose of describing specific embodiments, but are not intended to limit the present application. The terms "comprising" and "having" and any variations thereof in the specification and the claims of the present application as well as the foregoing description of the drawings are intended to cover non-exclusive inclusions. The terms "first", "second", etc. in the specification and the claims of the present application as well as the above drawings are used to distinguish different objects, rather than to describe a specific order or primary-secondary relationship.

The phrase "embodiment" referred to in the present application means that the descriptions of specific features, structures, and characteristics in combination with the embodiment are included in at least one embodiment of the present application. The appearance of this phrase in various places in the specification does not necessarily refer to the same embodiment, nor is it a separate or alternative embodiment that is mutually exclusive with other embodiments.

In the description of the present application, it should be noted that the terms "mounting", "connecting", "connection" and "attachment" should be understood in a broad sense, unless otherwise explicitly specified or defined, for example, it may be a fixed connection, a detachable connection or an integrated connection; and may be a direct connection or an indirect connection through an intermediate medium, or may be a communication between the interior of two elements. For those of ordinary skill in the art, the specific meanings of the above terms in the present application can be understood according to specific situations.

In the present application, the term "and/or" is only an association relation describing associated objects, which means that there may be three relations, for example, A and/or B may represent three situations: A exists alone, both A and B exist, and B exists alone. In addition, the character "/" in the present application generally means that the associated objects before and after it are in an "or" relationship.

In the embodiments of the present application, the same reference signs denote the same components, and for the sake of brevity, detailed descriptions of the same components are omitted in different embodiments. It should be understood that the thickness, length, width and other dimensions of the various components in the embodiments of the present application shown in the drawings, as well as the overall thickness, length, width and other dimensions of an integrated apparatus, are for illustrative purposes only, and should not constitute any limitation to the present application.

In the present application, the phrase "a plurality of" means two or more.

In the present application, the battery cell may include a lithium-ion secondary battery, a lithium-ion primary battery, a lithium sulfur battery, a sodium lithium-ion battery, a sodium-ion battery or a magnesium-ion battery and so on. This is not limited in the embodiments of the present application. The battery cell may be in a cylindrical shape, a flat shape, a cuboid shape or another shape, which is also not limited in the embodiments of the present application. The battery cells are generally classified into three types depending on the way of package: cylindrical battery cells, prismatic battery cells and pouch battery cells, which are also not limited in the embodiments of the present application.

The battery mentioned in the embodiments of the present application refers to a single physical module including one or more battery cells to provide a higher voltage and capacity. For example, the battery mentioned in the present application may include a battery module or a battery pack, etc. The battery generally includes a box for packaging one or more battery cells. The box can prevent liquid or other foreign matters from affecting charging or discharging of the battery cells.

The battery cell includes an electrode assembly and an electrolyte solution, the electrode assembly being composed of a positive electrode plate, a negative electrode plate and a separator. The battery cell operates mainly relying on the movement of metal ions between the positive electrode plate and the negative electrode plate. The positive electrode plate includes a positive electrode current collector and a positive electrode active material layer, a surface of the positive electrode current collector is coated with the positive electrode active material layer, the positive electrode current collector not coated with the positive electrode active material layer protrudes from the positive electrode current collector already coated with the positive electrode active material layer, and the positive electrode current collector not coated with the positive electrode active material layer is used as a positive tab. Taking a lithium-ion battery as an example, the material of the positive electrode current collector may be aluminum, and the positive electrode active material may be lithium cobalt oxide, lithium iron phosphate, ternary lithium, lithium manganate, etc. The negative electrode plate includes a negative electrode current collector and a negative electrode active material layer, a surface of the negative electrode current collector is coated with the negative electrode active material layer, the negative electrode current collector not coated with the negative electrode active material layer protrudes from the negative electrode current collector already coated with the negative electrode active material layer, and the negative electrode current collector not coated with the negative electrode active material layer is used as a negative tab. The material of the negative electrode current collector may be copper, and the negative electrode active material may be carbon, silicon, etc. In order to ensure that no fusing occurs when a large current passes, there are a plurality of positive tabs which are stacked together, and there are a plurality of negative tabs which are stacked together. The separator may be of a material such as polypropylene (PP) or polyethylene (PE). In addition, the electrode assembly may have a wound structure or a stacked structure, but the embodiments of the present application are not limited thereto.

For a general battery cell, the battery cell includes an electrode assembly and a shell in which the electrode assembly is accommodated. In order to facilitate the output of the electric energy of the battery cell, a wall portion of the shell is generally used as an output electrode of the battery cell, and a tab of the electrode assembly is electrically connected to the wall portion to output the electric energy of the battery cell through the wall portion.

The inventors have noticed that in order to better implement the electrical connection between the wall portion and the tab, a current collecting member is generally provided in the shell, and the wall portion and the tab are connected together via the current collecting member to implement the electrical connection between the wall portion and the tab. For a battery cell of such a structure, the wall portion is likely to fail to output the electric energy.

The inventors have conducted in-depth research and found that the electrical connection between the current collecting member in the shell and the wall portion is not stable, and the electrical connection between the current collecting member and the wall portion is prone to failure after the battery cell has been used for a period of time, which affects the service life of the battery cell.

In view of this, an embodiment of the present application provides a battery cell, in which a protrusion is provided on a side of a current collecting member facing a wall portion, a recess is provided on the wall portion, and at least a part of the protrusion is accommodated in the recess to position the current collecting member.

In such a battery cell, the protrusion is accommodated in the recess such that the current collecting member and the wall portion can be positioned. The efficiency of assembling the current collecting member and the wall portion can be improved. Moreover, the mating between the protrusion and the recess can limit the relative movement between the current collecting member and the wall portion, improve the connection stability between the current collecting member and the wall portion, and thus improve the reliability of the electrical connection between the current collecting member and the wall portion, thereby effectively prolonging the service life of the battery cell.

The battery cell described in the embodiments of the present application are applicable to batteries and electrical devices using the batteries.

The electrical device may be a vehicle, a mobile phone, a portable device, a labtop, a ship, a spacecraft, an electric toy, an electric tool, etc. The vehicle may be a fuel vehicle, a gas vehicle or a new energy vehicle. The new energy vehicle may be an all-electric vehicle, a hybrid electric vehicle, an extended-range vehicle, etc. The spacecraft includes airplanes, rockets, space shuttles, spaceships, etc. The electric toy includes fixed or mobile electric toys, such as game consoles, electric car toys, electric ship toys and electric aircraft toys. The electric tool includes metal cutting electric tools, grinding electric tools, assembly electric tools and railway electric tools, such as electric drills, electric grinders, electric wrenches, electric screwdrivers, electric hammers, impact drills, concrete vibrators and electric planers. The electrical device is not specially limited in the embodiments of the present application.

In the following embodiments, for convenience of description, the electrical device being a vehicle is taken as an example for description.

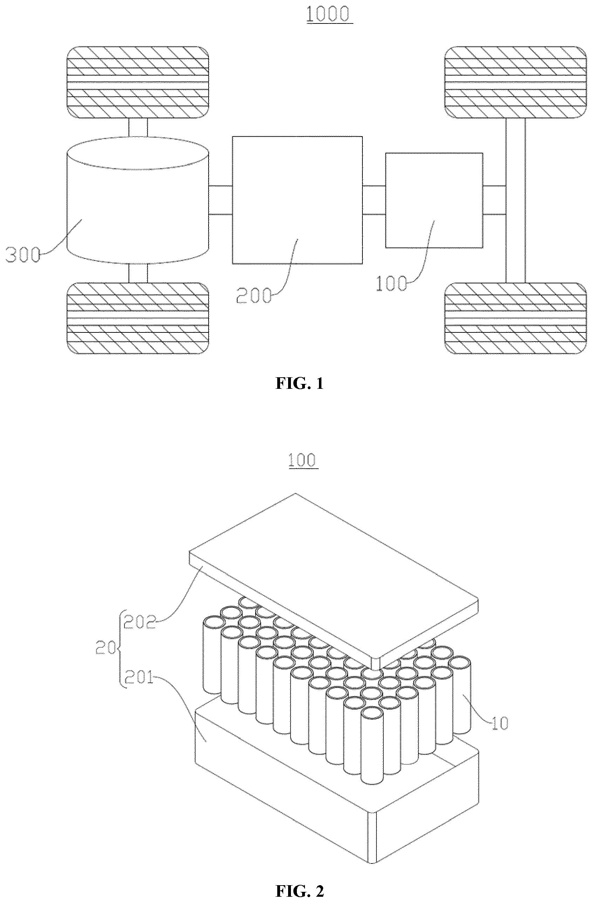

Referring to Fig. 1, Fig. 1 is a schematic structural diagram of a vehicle 1000 according to some embodiments of the present application. The vehicle 1000 is internally provided with a battery 100. The battery 100 may be arranged at the bottom or head or tail of the vehicle 1000. The battery 100 may be configured to supply power to the vehicle 1000. For example, the battery 100 may be used as an operation power supply of the vehicle 1000.

The vehicle 1000 may further include a controller 200 and a motor 300. The controller 200 is configured to control the battery 100 to power the motor 300. For example, the controller is used for meeting the operating power demand when the vehicle 1000 is starting, navigating and driving.

In some embodiments of the present application, the battery 100 not only may serve as an operating power source of the vehicle 1000, but also may serve as a driving power source of the vehicle 1000, thus replacing or partially replacing fuel or natural gas to provide driving power for the vehicle 1000.

Referring to Fig. 2, Fig. 2 is an exploded view of a battery 100 according to some embodiments of the present application. The battery 100 includes a battery cell 10 and a box 20. The box 20 is configured to accommodate the battery cell 10.

The box 20 is a component for accommodating the battery cell 10, the box 20 provides an accommodating space for the battery cell 10, and the box 20 may be of various structures. In some embodiments, the box 20 may include a first part 201 and a second part 202. The first part 201 and the second part 202 are covered by each other to define the accommodating space for accommodating the battery cell 10. The first part 201 and the second part 202 may have a variety of shapes, such as a cuboid, a cylinder, etc. The first part 201 may be of a hollow structure with one side open, the second part 202 may also be of a hollow structure with one side open, and the open side of the second part 202 covers the open side of the first part 201, so as to form the box 20 having the accommodating space. It is also possible that the first part 201 may be of a hollow structure with one side open, the second part 202 may be a plate-like structure, and the second part 202 covers the open side of the first part 201, so as to form the box 20 having the accommodating space. The first part 201 and the second part 202 may be sealed by means of a sealing element, which may be a sealing ring, a sealant, etc.

There may be one or more battery cells 10 in the battery 100. If there are a plurality of battery cells 10, the plurality of battery cells 10 may be connected in series, in parallel or in series-parallel. The series-parallel connection means that some of the plurality of battery cells 10 are connected in series and some are connected in parallel. It is possible that the plurality of battery cells 10 are connected in series or in parallel or in series-parallel first to form a plurality of battery modules, which may then be connected in series or in parallel or in series-parallel to form an entirety that is accommodated in the box body 20. It is also possible that all the battery cells 10 are directly connected in series or in parallel or in series-parallel, and then an entirety composed of all the battery cells 10 is received in the box 20.

In some embodiments, the battery 100 further includes a bus component, and the plurality of battery cells 10 may be electrically connected to each other via the bus component, so as to implement series connection, parallel connection, or series-parallel connection of the plurality of battery cells 10. The bus component may be a metal conductor such as copper, iron, aluminum, stainless steel, an aluminum alloy, etc.

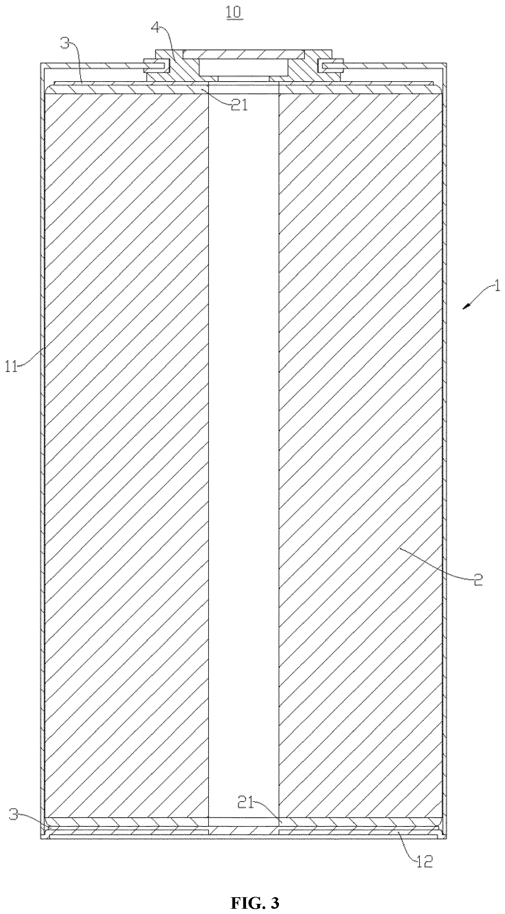

Referring to Fig. 3, Fig. 3 is cross-sectional view of a battery cell 10 according to some embodiments of the present application. The battery cell 10 includes a shell 1, an electrode assembly 2 and a current collecting member 3.

The shell 1 is a component for accommodating the electrode assembly 2. The shell 1 may include a housing 11 and an end cover 12. The housing 11 has an opening, and the end cover 12 is a component that covers the opening of the housing 11 to isolate the internal environment of the battery cell 10 from the external environment. The end cover 12 and the housing 11 can jointly define a sealed space for accommodating the electrode assembly 2, an electrolyte solution and other components. The housing 11 may have various shapes, such as a cylinder or a cuboid. The housing 11 may be made of various materials, such as copper, iron, aluminum, stainless steel, an aluminum alloy, etc. The end cover 12 may be shaped to match the shape of the housing 11. For example, the housing 11 is of a cuboid structure, and the end cover 12 is of a rectangular plate-like structure matching the housing 11. For another example, the housing 11 is of a cylindrical structure, and the end cover 12 is of a circular plate-like structure matching the housing 11. The end cover 12 may be made of various materials, such as copper, iron, aluminum, steel, an aluminum alloy, etc.

The shell 1 has two output electrodes with opposite polarities for outputting the electric energy of the battery cell 10. It is possible that the end cover 12 serves as one output electrode, and the housing 11 serves as the other output electrode. Of course, as shown in Fig. 3, it is also possible that an electrode terminal 4 is provided on an end wall at one end of the housing 11 away from the end cover 12, with the electrode terminal 4 serving as one output electrode and the end cover 12 serving as the other output electrode.

The electrode assembly 2 is a component of a battery cell 10 where an electrochemical reaction occurs. The electrode assembly 2 may include a positive electrode plate, a negative electrode plate and a separator. The electrode assembly 2 may be of a wound structure formed by winding the positive electrode plate, the separator and the negative electrode plate, or a stacked structure formed by stacking the positive electrode plate, the separator film and the negative electrode plate. The electrode assembly 2 has two tabs 21 with opposite polarities, namely a positive tab and a negative tab. The positive tab may be the part of the positive electrode plate that is not coated with a positive electrode active material layer, and the negative tab may be a part of the negative electrode plate that is not coated with a negative electrode active material layer.

The current collecting member 3 is a component for connecting the tabs 21 to the output electrodes to implement the electrical connection between the tabs 21 and the output electrodes. The current collecting member 3 is a conductor, and the current collecting member 3 may be made of copper, iron, aluminum, steel, an aluminum alloy, or other materials. The current collecting member 3 may be of a plate-like structure, such as a rectangular plate, a circular plate, etc.

There may be one or two current collecting members 3 in the battery cell 10. If there are two current collecting members 3 in the battery cell 10, one tab 21 of the electrode assembly 2 is connected to one output electrode via one current collecting member 3, and the other tab 21 of the electrode assembly 2 is connected to the other output electrode via the other current collecting member 3. If there is only one current collecting member 3 in the battery cell 10, one tab 21 of the electrode assembly 2 is connected to one output electrode via the one current collecting member 3, and the other tab 21 of the electrode assembly 2 is directly connected to the other output electrode. As shown in Fig. 3, taking an example in which the electrode terminal 4 on the housing 11 serves as one output electrode and the end cover 12 as serves the other output electrode, the electrode terminal 4 may be connected to one tab 21 via one current collecting member 3, and the end cover 12 may be connected to the other tab 21 via another current collecting member 3.

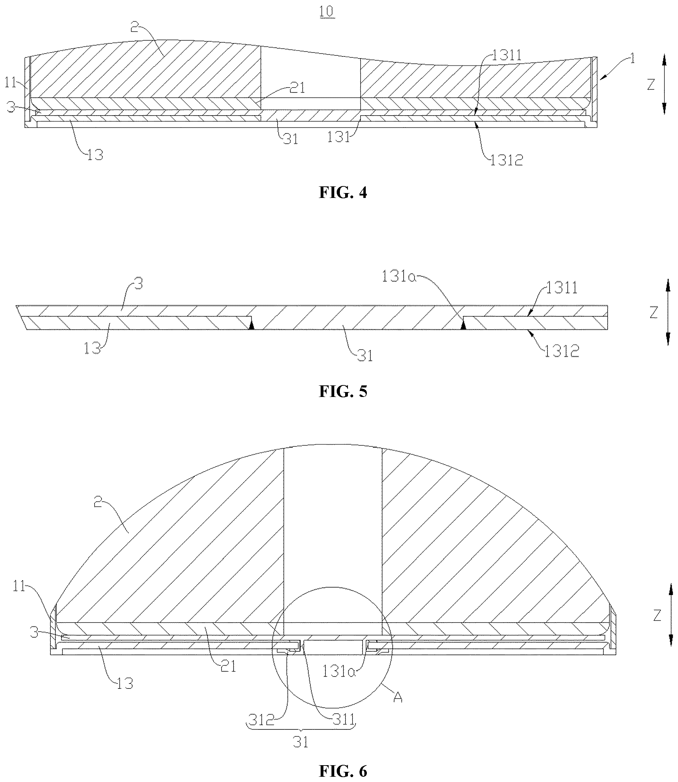

Referring to Fig. 4, Fig. 4 is a partial view of the battery cell 10 shown in Fig. 3. An embodiment of the present application provides a battery cell 10. The battery cell 10 includes a shell 1, an electrode assembly 2 and a current collecting member 3. The shell 1 has a wall portion 13 located at one end of the shell 1 in a first direction Z. The electrode assembly 2 is accommodated in the shell 1, and the electrode assembly 2 is provided with a tab 21. The current collecting member 3 is accommodated in the shell 1. In the first direction Z, the current collecting member 3 is located on a side of the electrode assembly 2 facing the wall portion 13. The current collecting member 3 is configured to be connected to the wall portion 13 and the tab 21 to implement an electrical connection between the wall portion 13 and the tab 21. A protrusion 31 is provided on a side of the current collecting member 3 facing the wall portion 13, and the wall portion 13 is provided with a recess 131. The recess 131 is configured to accommodate at least a part of the protrusion 31 to position the current collecting member 3.

The wall portion 13 is a portion of the shell 1 that is electrically connected to the tab 21, and the wall portion 13 is an output electrode of the battery cell 10. In an embodiment where the shell 1 includes a housing 11 and an end cover 12, the wall portion 13 may be the end cover 12, or the wall portion 13 may be an end wall of the housing 11 opposite to the end cover 12. In an embodiment where the end wall of the housing 11 opposite to the end cover 12 is provided with an electrode terminal 4, the wall portion 13 may be the electrode terminal 4 on the end cover 12, or the wall portion 13 may be the end wall of the housing 11. The first direction Z is an extension direction of the shell 1, an axial direction of the electrode assembly 2, and an arrangement direction of the end cover 12 and the wall portion 13 of the housing 11. That is, the end cover 12 and the wall portion 13 of the housing 11 are arranged opposite to each other in the first direction Z. As an example, in Fig. 4, the wall portion 13 of the shell 1 is the end cover 12, and the end cover 12 may be welded to the housing 11 to close the opening of the housing 11.

The current collecting member 3 is a component for implementing the electrical connection between the tab 21 and the wall portion 13. The tab 21 here may be a positive tab of the electrode assembly 2, or a negative tab of the electrode assembly 2. It can be understood that the current collecting member 3 is connected to both the tab 21 and the wall portion 13. The current collecting member 3 may be shaped to match the shape of the housing 11. For example, in Fig. 4, the shell 1 is of a cylindrical structure, and the current collecting member 3 is of a circular plate-like structure.

The protrusion 31 may be partially accommodated in the recess 131, or the protrusion 31 may be completely accommodated in the recess 131. The protrusion 31 is provided on an outer end face of the current collecting member 3, and the outer end face of the current collecting member 3 is a surface of the current collecting member 3 facing the wall portion 13. After the protrusion 31 is accommodated in the recess 131 and a positioning fit is formed, the outer end face of the current collecting member 3 may be in contact with the wall portion 13, or there may be a gap therebetween. If the outer end face of the current collecting member 3 is in contact with the wall portion 13, the current collecting member 3 is directly electrically connected to the wall portion 13. If there is a distance between the outer end face of the current collecting member 3 and the wall portion 13, the current collecting member 3 may be electrically connected to the wall portion 13 via the protrusion 31.

Taking the current collecting member 3 of a circular plate-like structure as an example, the protrusion 31 may be arranged at the center of the current collecting member 3.

The recess 131 is provided on the wall portion 13, and the recess 131 extends from an inner surface 1311 of the wall portion 13 to an outer surface 1312 of the wall portion 13. The inner surface 1311 of the wall portion 13 is a surface of the wall portion 13 facing the current collecting member 3, and the outer surface 1312 of the wall portion 13 is a surface of the wall portion 13 facing away from the current collecting member 3. The recess 131 may be a groove that penetrates the inner surface 1311 of the wall portion 13 but does not penetrate the outer surface 1312 of the wall portion 13, or may be a through hole 131a that penetrates the inner and outer surfaces of the wall portion 13.

The shapes of the protrusion 31 and the recess 131 match each other, and the cross-sections of the protrusion 31 and the recess 131 may be in various shapes, such as circular, rectangular, triangular, rhombus, hexagonal, etc. The protrusion 31 may be made of a metal conductor material, such as copper, iron, aluminum, steel, an aluminum alloy, etc. The protrusion 31 and the current collecting member 3 may be of an integrally formed structure; or the protrusion 31 and the current collecting member 3 may be separately provided and connected together, for example, by welding.

In the embodiment of the present application, the protrusion 31 is provided on the current collecting member 3, the recess 131 is provided on the wall portion 13, and the protrusion 31 is accommodated in the recess 131 such that the current collecting member 3 and the wall portion 13 can be positioned. The efficiency of assembling the current collecting member 3 and the wall portion 13 can be improved. Moreover, the mating between the protrusion 31 and the recess 131 can limit the relative movement between the current collecting member 3 and the wall portion 13, improve the connection stability between the current collecting member 3 and the wall portion 13, and thus improve the reliability of the electrical connection between the current collecting member 3 and the wall portion 13, thereby effectively prolonging the service life of the battery cell 10.

In some embodiments, referring to Fig. 5, Fig. 5 is a schematic diagram of the connection between the current collecting member 3 and the wall portion 13 shown in Fig. 4. The recess 131 is a through hole 131a that penetrates the wall portion 13 in the first direction Z.

It can be understood that the recess 131 penetrates the inner surface 1311 and the outer surface 1312 of the wall portion 13.

An outer peripheral face of the protrusion 31 and a hole wall of the through hole 131a may form an interference fit or a clearance fit. The protrusion 31 may be completely located in the through hole 131a or may partially extend out of the through hole 131a.

The size of the through hole 131a may be set according to specific requirements. If the diameter of the through hole 131a is too small, the strength of the protrusion 31 may be insufficient. If the diameter of the through hole 131a is too large, the strength of the wall portion 13 may be insufficient and the connection between the wall portion 13 and other components is not facilitated. Taking an example in which the wall portion 13 is circular and the through hole 131a is a circular hole, the ratio of the diameter of the through hole 131a to the diameter of the wall portion 13 may be set to 1/20-4/5.

In this embodiment, the recess 131 is a through hole 131a provided in the wall portion 13, so that the forming of the recess 131 is facilitated, and the mating condition between the protrusion 31 and the recess 131 can also be determined more directly, ensuring that the protrusion 31 can accurately mate with the recess 131 during assembly.

In some embodiments, the protrusion 31 is welded to the wall portion 13.

The protrusion 31 and the wall portion 13 may be welded by means of seam welding. A weld mark formed by welding the protrusion 31 to the wall portion 13 may be continuous or discontinuous.

In this embodiment, the protrusion 31 is welded to the wall portion 13 to implement a fixed connection between the protrusion 31 and the wall portion 13, so that the protrusion 31 is fixed to the wall portion 13, to maintain the relative position between the current collecting member 3 and the wall portion 13, thereby implementing the electrical connection between the current collecting member 3 and the wall portion 13.

In the related art, the wall portion 13 and the current collecting member 3 are generally welded together by penetration welding. Since the current collecting member 3 is located inside the shell 1, the welding condition between the wall portion 13 and the current collecting member 3 cannot be determined during this welding, and false welding is likely to occur. The reliability of the electrical connection between the wall portion 13 and the current collecting member 3 is poor, which affects the service life of the battery cell 10.

In this embodiment, since the recess 131 is a through hole 131a provided in the wall portion 13, when the protrusion 31 is welded to the wall portion 13, the welding condition between the protrusion 31 and the wall portion 13 can be intuitively known, and false welding is less likely to occur, thereby ensuring the firmness of the welding between the protrusion 31 and the wall portion 13 and further improving the reliability of the electrical connection between the current collecting member 3 and the wall portion 13.

In some embodiments, the protrusion 31 has an outer peripheral face facing the hole wall of the through hole 13 1a, and a weld seam is formed between the outer peripheral face of the protrusion 31 and the hole wall of the through hole 131a. A weld mark formed by welding the protrusion 31 to the wall portion 13 covers the weld seam, and the weld mark extends circumferentially along the weld seam.

The weld mark formed by welding the protrusion 31 to the wall portion 13 may be solder located in the weld seam, or may be the parts of the protrusion 31 and the wall portion 13 that are fused together after being subjected to high temperature. The outer peripheral face of the protrusion 31 is a face of the protrusion 31 that is parallel to the first direction Z and surrounds the entire protrusion. Taking an example in which the through hole 131a is a circular hole, the hole wall of the through hole 131a is a cylindrical face, and the outer peripheral face of the protrusion 31 is also a cylindrical face.

It can be understood that the weld mark extends circumferentially along the weld seam, so that the weld seam is of an annular structure.

In this embodiment, seam welding of the protrusion 31 and the wall portion 13 is implemented, the welding efficiency is high, and the firmness of the welding between the protrusion 31 and the wall portion 13 can be ensured. In addition, since the weld mark formed by welding the protrusion 31 to the wall portion 13 extends circumferentially along the weld seam and covers the weld seam, the gap between the outer peripheral face of the protrusion 31 and the hole wall of the through hole 131a is blocked, thereby implementing sealing between the protrusion 31 and the wall portion 13 and reducing the risk of liquid leakage due to the provision of the through hole 131a in the wall portion 13.

In some embodiments, in the first direction Z, the wall portion 13 has an outer surface 1312 facing away from the current collecting member 3, and the through hole 131a penetrates the outer surface 1312. An end face at one end of the protrusion 31 facing away from the current collecting member 3 is flush with the outer surface 1312; or the end face at the end of the protrusion facing away from the current collecting member 3 is closer to the electrode assembly 2 than the outer surface 1312 (shown in Fig. 2).

As an example, in Fig. 5, the end face at the end of the protrusion 31 facing away from the current collecting member 3 is flush with the outer surface 1312.

As an example, in the first direction Z, the length of the protrusion 31 is defined as H1, and a distance between the outer surface 1312 and the inner surface 1311 of the wall portion 13 is defined as H2, where H1 and H2 satisfy 1/2 ≤ H1/H2 ≤ 1. If H1/H2 = 1, when the inner surface 1311 of the wall portion 13 abuts against the current collecting member 3, the end face at the end of the protrusion 31 facing away from the current collecting member 3 can be flush with the outer surface 1312.

In this embodiment, if the end face at the end of the protrusion 31 facing away from the current collecting member 3 is flush with the outer surface 1312, the welding effect and the sealing performance between the protrusion 31 and the wall portion 13 can be better achieved. If the end face at the end of the protrusion 31 facing away from the current collecting member 3 is closer to the electrode assembly 2 than the outer surface 1312, the end of the protrusion 31 facing away from the current collecting member 3 is located in the through hole 131a, and the protrusion 31 does not occupy the space outside the battery cell 10, reducing the overall volume of the battery cell 10.

In some embodiments, still referring to Fig. 5, in the first direction Z, the wall portion 13 has an inner surface 1311 facing the current collecting member 3. The through hole 131a penetrates the inner surface 1311, and the current collecting member 3 abuts against the inner surface 1311. Such a structure not only increases the contact area between the current collecting member 3 and the wall portion 13, thereby achieving large-area current flow between the current collecting member 3 and the wall portion 13, but also improves the stability of the current collecting member 3 inside the battery cell 10.

In some embodiments, referring to Fig. 6, Fig. 6 is a partial view of a battery cell 10 according to some other embodiments of the present application. The protrusion 31 includes an extension portion 311 and a limiting portion 312. In the first direction Z, the extension portion 311 extends from the current collecting member 3 into the through hole 131a. The limiting portion 312 is connected to the extension portion 311. A limiting gap 32 (not shown in Fig. 6) is formed between the limiting portion 312 and the current collecting member 3 in the first direction Z. The limiting gap 32 is configured to accommodate at least a part of the wall portion 13 to limit a movement of the current collecting member 3 relative to the wall portion 13 in the first direction Z.

The extension portion 311 is a portion of the protrusion 31 extending in the first direction Z. The extension portion 311 may shaped to match the shape of the through hole 131a. The cross-section of the extension portion 311 may be circular, rectangular, triangular, rhombus, hexagonal, etc.

The limiting portion 312 is a portion of the protrusion 31 arranged opposite to the current collecting member 3 in the first direction Z. There may be one limiting portion 312 in the protrusion 31. For example, the limiting portion 312 is of an annular structure extending in a circumferential direction of the extension portion 311; or there may be a plurality of limiting portions 312 in the protrusion 31, and the plurality of limiting portions 312 may be distributed in the circumferential direction of the extension portion 311.

In this embodiment, the extension portion 311 extends into the through hole 131a to limit the current collecting member 3 in a direction perpendicular to the first direction Z. The at least a part of the wall portion 13 is accommodated in the limiting gap 32 formed between the limiting portion 312 and the current collecting member 3, to limit the current collecting member 3 in the first direction Z. In this way, the stability and firmness of the connection between the current collecting member 3 and the wall portion 13 are improved, and a reliable electrical connection between the current collecting member 3 and the wall portion 13 is implemented.

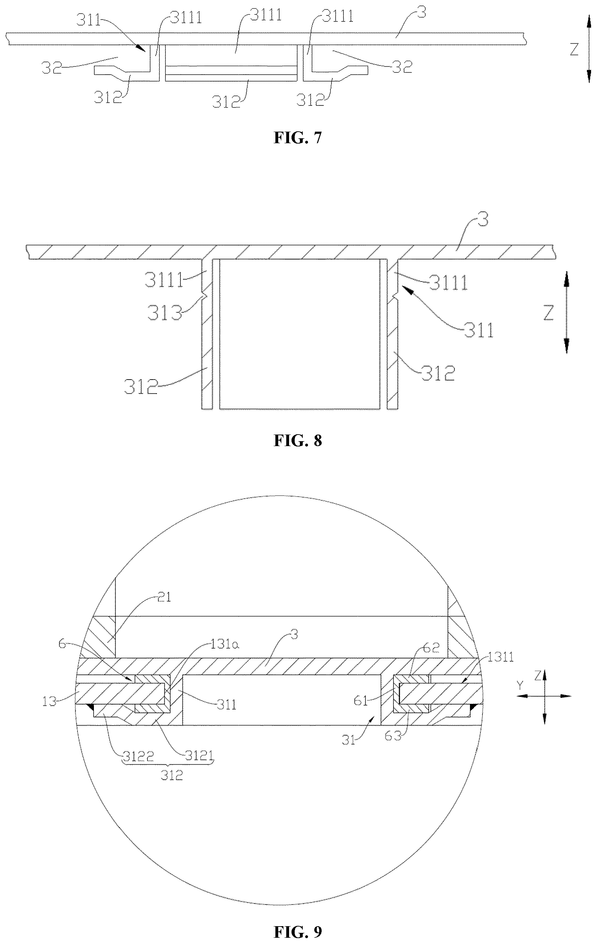

In some embodiments, referring to Fig. 7, Fig. 7 is a schematic structural diagram of the current collecting member 3 shown in Fig. 6 (after the limiting portion 312 is turned relative to the extension portion 311). The protrusion 31 includes a plurality of limiting portions 312, and the plurality of limiting portions 312 are distributed on the extension portion 311 in the circumferential direction of the extension portion 311.

The extension portion 311 may be of an integral structure. For example, the extension portion 311 is of an integral columnar structure. Of course, the extension portion 311 may be of a solid columnar structure or a hollow cylindrical columnar structure. As shown in Fig. 7, the extension portion 311 may alternatively be of a split structure. The extension portion 311 may include a plurality of split parts 3111. The plurality of split parts 3111 are independently connected to the current collecting member 3. Each split part 3111 is correspondingly provided with a limiting portion 312, and the split part 3111 and the limiting portion 312 may be of an integrally formed structure. As an example, the extension portion 311 includes four split parts 3111, and the four split parts 3111 may be arranged on four sides of a rectangle.

In this embodiment, the plurality of limiting portions 312 are distributed on the extension portion 311 in the circumferential direction of the extension portion 311, and the plurality of limiting portions 312 can all provide the limiting function, further improving the stability and firmness of the connection between the current collecting member 3 and the wall portion 13.

In some embodiments, still referring to Fig. 7, the limiting portion 312 is turnably connected to the extension portion 311, and the limiting portion 312 can be turned outwardly relative to the extension portion 311, such that the limiting gap 32 is formed between the limiting portion 312 and the current collecting member 3.

The extension portion 311 being turned outwardly means that the extension portion 311 is turned relative to the limiting portion 312 in a direction away from the central axis of the limiting portion 312. The protrusion 31 may be partially turned outwardly to form the limiting portion 312.

In an embodiment where the extension portion 311 includes a plurality of split parts 3111, each of the limiting portions 312 can be turned outwardly with respect to a corresponding one of the split parts 3111, and after the turning, the limiting portion 312 and the split part 3111 may be formed into a substantially "L"-shaped structure.

In this embodiment, since the limiting portion 312 is turnably connected to the extension portion 311, the limiting portion 312 can be formed in place by turning, so that the structure is simple and the difficulty of assembling the current collecting member 3 and the wall portion 13 is reduced.

When assembling the current collecting member 3 and the wall portion 13, the protrusion 31 may be first inserted into the through hole 131a, the limiting portion 312 is then turned outwardly relative to the extension portion 311, and finally the limiting portion 312 and the current collecting member 3 form the limiting gap 32, so that the limiting portion 312 reaches a position where it can limit the current collecting member 3.

In some embodiments, referring to Fig. 8, Fig. 8 is a schematic structural diagram of the current collecting member 3 shown in Fig. 6 (before the limiting portion 312 is turned relative to the extension portion 311). A notch 313 is formed at a connection position between the limiting portion 312 and the extension portion 311 to allow the limiting portion 312 to be turned outwardly relative to the extension portion 311.

It can be understood that no matter one limiting portion 312 or a plurality of limiting portions 312 are provided in the protrusion 31, a notch 313 can be provided at the position where the limiting portion 312 is connected to the extension portion 311. In an embodiment where the extension portion 311 includes a plurality of split parts 3111, a notch 313 may be provided at a connection position between each limiting portion 312 and a corresponding split part 3111.

As an example, the notch 313 is a V-shaped groove.

In this embodiment, the notch 313 is arranged at the connection position between the limiting portion 312 and the extension portion 311, so that the limiting portion 312 can be more easily turned outwardly relative to the extension portion 311.

In some embodiments, referring to Fig. 9, Fig. 9 is a partial enlarged view of portion A of the battery cell 10 shown in Fig. 6. The limiting portion 312 is welded to the wall portion 13.

In this embodiment, the limiting portion 312 is welded to the wall portion 13, and the limiting portion 312 is fixedly connected to the wall portion 13, so that the limiting portion 312 and the wall portion 13 are fixed to implement the electrical connection between the current collecting member 3 and the wall portion 13, thereby improving the stability and firmness of the connection between the current collecting member 3 and the wall portion 13, ensuring stable current flow between the current collecting member 3 and the wall portion 13, and implementing a more reliable electrical connection between the current collecting member 3 and the wall portion 13.

In the embodiment where the notch 313 is arranged at the connection position between the limiting portion 312 and the extension portion 311, the notch 313 makes the connection position between the limiting portion 312 and the extension portion 311 relatively weak. Since the limiting portion 312 is welded to the wall portion 13, during the process of outputting electric energy through the wall portion 13, the current will pass through the limiting portion 312. When the current passing through is large, the connection position between the limiting portion 312 and the extension portion 311 will be melted first, thereby providing the function of overcurrent protection and improving the safety of the battery cell 10.

In some embodiments, still referring to Fig. 9, the battery cell 10 may further include a sealing member 6. The sealing member 6 is configured to seal the protrusion 31 and the wall portion 13.

The sealing member 6 may be a rubber sealing ring. The sealing member 6 may only seal the gap between the hole wall of the through hole 131a and the outer peripheral face of the extension portion 311; or the sealing member 6 may only seal the gap between the limiting portion 312 and the wall portion 13. Of course, the sealing member 6 can alternatively simultaneously seal the gap between the hole wall of the through hole 131a and the outer peripheral face of the extension portion 311 and the gap between the limiting portion 312 and the wall portion 13.

As an example, in Fig. 9, the sealing member 6 is configured to keep the wall portion 13 at a certain distance from the current collecting member 3, so that the inner surface 1311 of the wall portion 13 is not in contact with the current collecting member 3. The limiting portion 312 of the protrusion 31 is welded to the wall portion 13, so that the wall portion 13 and the current collecting member 3 are electrically connected to each other via the protrusion 31.

In this embodiment, the sealing member 6 provides the function of sealing the protrusion 31 and the wall portion 13, thereby reducing the risk of liquid leakage due to the provision of the through hole 131a in the wall portion 13.

In some embodiments, still referring to Fig. 9, the sealing member 6 includes a first sealing portion 61 sleeving the extension portion 311 and located in the through hole 131a.

The first sealing portion 61 may be of an annular structure, and the first sealing portion 61 closely mates with the outer peripheral face of the extension portion 311 and the hole wall of the through hole 131a.

In this embodiment, the first sealing portion 61 can effectively seal the gap between the outer peripheral face of the extension portion 311 and the hole wall of the through hole 131a, thereby reducing the risk of liquid leakage due to the provision of the through hole 131a in the wall portion 13.

In some embodiments, still referring to Fig. 9, the sealing member 6 may further include a second sealing portion 62. The second sealing portion 62 is connected to the first sealing portion 61 and extends in a circumferential direction of the first sealing portion 61. The second sealing portion 62 is at least partially located between the current collecting member 3 and the wall portion 13 in the first direction Z.

The second sealing portion 62 may be of an annular structure extending in the circumferential direction of the first sealing portion 61.

In this embodiment, the second sealing portion 62 can effectively seal the gap between the current collecting member 3 and the wall portion 13, further improving the sealing effect of the sealing member 6.

In some embodiments, still referring to Fig. 9, the sealing member 6 may further include a third sealing portion 63, which is connected to the first sealing portion 61 and extends in the circumferential direction of the first sealing portion 61. The third sealing portion 63 is at least partially located between the limiting portion 312 and the wall portion 13 in the first direction Z.

The third sealing portion 63 may be of an annular structure extending in the circumferential direction of the first sealing portion 61.

In an embodiment where the sealing member 6 further includes the second sealing portion 62, the first sealing portion 61, the second sealing portion 62 and the third sealing portion 63 roughly form an "I"-shaped structure. The sealing member 6 with this structure can be caught at an edge position of the through hole 131a provided in the wall portion 13, so that it is possible to improve the stability of the sealing member 6 and facilitate the assembly of the current collecting member 3 and the end wall.

In this embodiment, the third sealing portion 63 can effectively seal the gap between the limiting portion 312 and the wall portion 13, further improving the sealing effect of the sealing member 6.

In some embodiments, still referring to Fig. 9, the limiting portion 312 includes a covering section 3121 and a connecting section 3122. The covering section 3121 is connected to the extension portion 311, and the covering section 3121 covers the third sealing portion 63 in the first direction Z. In a second direction Y, the connecting section 3122 is connected to an end of the covering section 3121 away from the extension portion 311, and the connecting section 3122 as a whole extends beyond the third sealing portion 63. The second direction Y is perpendicular to the first direction Z. The connecting section 3122 abuts against the wall portion 13 in the first direction Z.

The covering section 3121 is a portion of the limiting portion 312 covering the third sealing portion 63 in the first direction Z, and the connecting section 3122 is a portion of the limiting portion 312 extending beyond the third sealing portion 63 in the second direction Y and abutting against the wall portion 13. Taking the wall portion 13 of a circular structure as an example, the first direction Z is an axial direction of the wall portion 13, and the second direction Y is a radial direction of the wall portion 13.

In an embodiment where the limiting portion 312 is welded to the wall portion 13, the connecting section 3122 of the limiting portion 312 may be welded to the wall portion 13.

In this embodiment, the connecting section 3122 of the limiting portion 312 abuts against the wall portion 13 in the first direction Z, to implement the electrical connection between the limiting portion 312 and the wall portion 13, thereby implementing a reliable electrical connection between the current collecting member 3 and the wall portion 13.

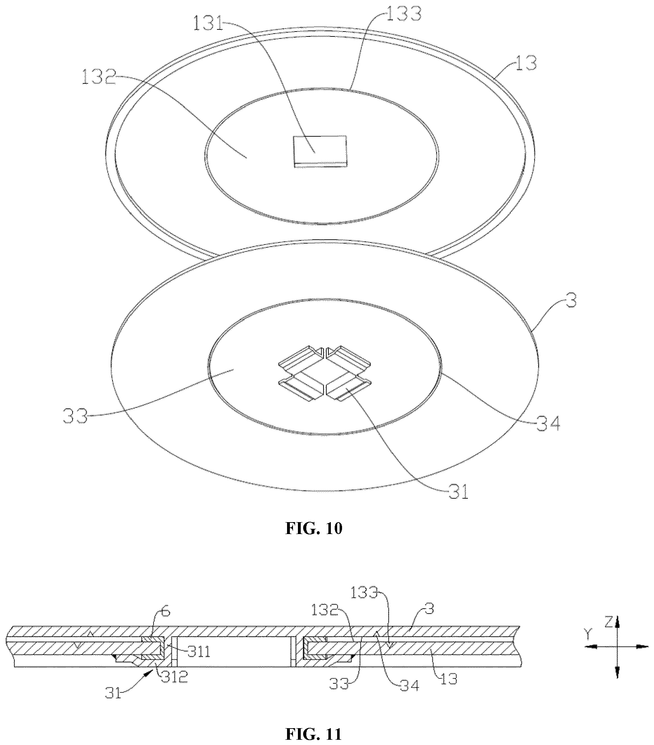

In some embodiments, referring to Fig. 10, Fig. 10 is an exploded view of a wall portion 13 and a current collecting member 3 according to some embodiments of the present application. The wall portion 13 has a first pressure relief region 132, and the current collecting member 3 has a second pressure relief region 33. The first pressure relief region 132 and the second pressure relief region 33 are configured to be opened when the pressure or temperature inside the battery cell 10 reaches a threshold to relieve the pressure inside the battery cell 10. In the first direction Z (as shown in Fig. 10), the first pressure relief region 132 and the second pressure relief region 33 are arranged opposite to each other.

The first pressure relief region 132 is a region of the wall portion 13 that can be opened when the pressure or temperature inside the battery cell 10 reaches the threshold. After the first pressure relief region 132 is opened, an opening portion will be formed in a region of the wall portion 13 corresponding to the first pressure relief region 132. The second pressure relief region 33 is a region of the current collecting member 3 that can be opened when the pressure or temperature inside the battery cell 10 reaches the threshold. After the second pressure relief region 33 is opened, an opening portion will be formed in a region of the current collecting member 3 corresponding to the second pressure relief region 33. The first pressure relief region 132 and the second pressure relief region 33 may be in various shapes, such as circular, rectangular, etc.

In this embodiment, the first pressure relief region 132 of the wall portion 13 and the second pressure relief region 33 of the current collecting member 3 can both be opened to relieve pressure, ensuring that when the battery cell 10 is subjected to thermal runaway, the internal emissions can be discharged to the outside of the battery cell 10 in a timely manner through the second pressure relief region 33 and the first pressure relief region 132 in sequence, thereby ensuring the safety of the battery cell 10.

In some embodiments, still referring to Fig. 10, the recess 131 is arranged in the first pressure relief region 132, and the protrusion 31 is arranged in the second pressure relief region 33.

Since the at least a part of the protrusion 31 is accommodated in the recess 131, and the recess 131 and the protrusion 31 are respectively arranged in the first pressure relief region 132 and the second pressure relief region 33, such a structure enables the first pressure relief region 132 and the second pressure relief region 33 to be opened as a whole, thereby improving the pressure relief efficiency.

In some embodiments, referring to Fig. 11, Fig. 11 is an assembly diagram of the wall portion 13 and the current collecting member 3 shown in Fig. 10. The pressure relief area of the first pressure relief region 132 is greater than the pressure relief area of the second pressure relief region 33.

The pressure relief area of the first pressure relief region 132 refers to the area of the opening portion of the wall portion 13 formed after the first pressure relief region 132 is fully opened, and the pressure relief area of the second pressure relief region 33 refers to the area of the opening portion of the current collecting member 3 formed after the second pressure relief region 33 is fully opened. Taking an example in which the first pressure relief region 132 and the second pressure relief region 33 are both circular, the pressure relief area of the first pressure relief region 132 is the area of the circle corresponding to the first pressure relief region 132, and the pressure relief area of the second pressure relief region 33 is the area of the circle corresponding to the second pressure relief region 33.

In this embodiment, the pressure relief area of the first pressure relief region 132 is greater than the pressure relief area of the second pressure relief region 33, so that the outward opening of the second pressure relief region 33 is further facilitated, reducing the influence of the region of the wall portion 13 other than the first pressure relief region 132 on the opening of the second pressure relief region 33, and ensuring that the second pressure relief region 33 can be opened over a large area.

In some embodiments, still referring to Fig. 11, the wall portion 13 is provided with a first pressure relief groove 133. The first pressure relief groove 133 extends in a circumferential direction of the shell 1 to define the first pressure relief region 132. The current collecting member 3 is provided with a second pressure relief groove 34. The second pressure relief groove 34 extends in the circumferential direction of the shell 1 to define the second pressure relief region 33.

During the pressure relief process, the wall portion 13 will be split along the first pressure relief groove 133 to open the first pressure relief region 132, and the current collecting member 3 will be split along the second pressure relief groove 34 to open the second pressure relief region 33. The first pressure relief groove 133 may be in various shapes, such as circular, rectangular, etc. It can be understood that if the first pressure relief groove 133 is a circular groove, the first pressure relief region 132 is a circular region; and if the first pressure relief groove 133 is a rectangular groove, the first pressure relief region 132 is a rectangular region. The second pressure relief groove 34 may be in various shapes, such as circular, rectangular, etc. It can be understood that if the second pressure relief groove 34 is a circular groove, the second pressure relief region 33 is a circular region; and if the second pressure relief groove 34 is a rectangular groove, the second pressure relief region 33 is a rectangular region.

The first pressure relief groove 133 and the second pressure relief groove 34 are provided on the wall portion 13 to form the first pressure relief region 132 and the second pressure relief region 33 respectively, so that the implementation is simple and the forming and machining are easy.

In some embodiments, the first pressure relief groove 133 and the second pressure relief groove 34 are both circular grooves, the first pressure relief groove 133 and the second pressure relief groove 34 are coaxially arranged, and the diameter of the first pressure relief groove 133 is greater than the diameter of the second pressure relief groove 34. Such a structure makes the pressure relief area of the first pressure relief region 132 greater than the pressure relief area of the second pressure relief region 33, so that the outward opening of the second pressure relief region 33 is further facilitated, reducing the influence of the region of the wall portion 13 other than the first pressure relief region 132 on the opening of the second pressure relief region 33, and ensuring that the second pressure relief region 33 can be opened over a large area.

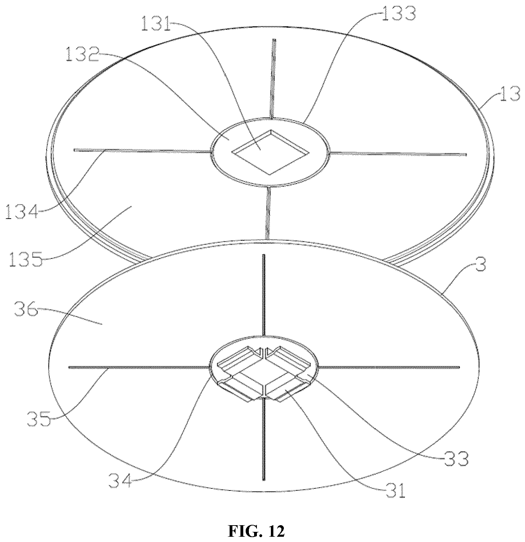

In some embodiments, referring to Fig. 12, Fig. 12 is an exploded view of a wall portion 13 and a current collecting member 3 according to some other embodiments of the present application. The wall portion 13 is provided with a plurality of third pressure relief grooves 134. The plurality of third pressure relief grooves 134 are distributed at intervals around the first pressure relief region 132. The third pressure relief grooves 134 are connected to the first pressure relief grooves 133, and a third pressure relief region 135 is formed between each two adjacent third pressure relief grooves 134 in the circumferential direction of the shell 1 (not shown in Fig. 12).

The circumferential direction of the shell 1 is the circumferential direction of the wall portion.

The third pressure relief groove 134 may be a linear groove extending along a linear track, or may be a curved groove extending along a curved line, for example, a corrugated groove. The number of third pressure relief grooves 134 on the wall portion 13 may be two, three, four, etc. Taking four third pressure relief grooves 134 as an example, four third pressure relief regions 135 are correspondingly formed on the wall portion 13.

As an example, in Fig. 12, the first pressure relief groove 133 is circular, and the third pressure relief groove 134 is a linear groove extending in a radial direction of the first pressure relief groove 133.

During pressure relief, the first pressure relief region 132 and the plurality of third pressure relief regions 135 on the wall portion 13 can all be opened, increasing the pressure relief area of the pressure relief regions on the wall portion 13, thereby effectively improving the pressure relief efficiency.

In some embodiments, still referring to Fig. 12, the current collecting member 3 is provided with a plurality of fourth pressure relief grooves 35. The plurality of fourth pressure relief grooves 35 are distributed at intervals around the second pressure relief region 33. The fourth pressure relief grooves 35 are connected to the second pressure relief grooves 34, and a fourth pressure relief region 36 is formed between each two adjacent fourth pressure relief grooves 35 in the circumferential direction of the shell 1. In the first direction Z (not shown in Fig. 12), the fourth pressure relief region 36 and the third pressure relief region 135 are arranged opposite to each other.

The fourth pressure relief groove 35 may be a linear groove extending along a linear track, or may be a curved groove extending along a curved line, for example, a corrugated groove. The number of fourth pressure relief grooves 35 on the current collecting member 3 may be two, three, four, etc. Taking four fourth pressure relief grooves 35 as an example, four fourth pressure relief regions 36 are correspondingly formed on the current collecting member 3.

As an example, in Fig. 12, the second pressure relief groove 34 is circular, and the fourth pressure relief groove 35 is a linear groove extending in a radial direction of the second pressure relief groove 34.

During the pressure relief, the second pressure relief region 33 and the plurality of fourth pressure relief regions 36 on the current collecting member 3 can be opened, increasing the pressure relief area of the pressure relief regions on the current collecting member 3, thereby effectively improving the pressure relief efficiency.

An embodiment of the present application provides a battery 100, including a box 20 and a battery cell 10 according to any one of the above embodiments. The box 20 is configured to accommodate the battery cell 10.

An embodiment of the present application provides an electrical device, including a battery 100 according to any one of the embodiments.

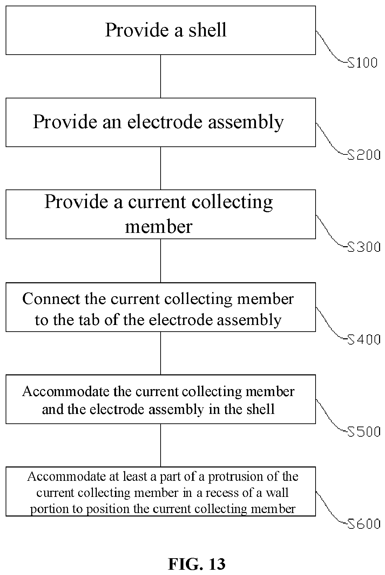

Referring to Fig. 13, Fig. 13 is a flowchart of a method for manufacturing a battery cell 10 according to some embodiments of the present application. An embodiment of the present application provides a method for manufacturing a battery cell 10. The manufacturing method includes the following steps.

In step S100, a shell 1 is provided. The shell 1 has a wall portion 13 located at one end of the shell 1 in a first direction Z. The wall portion 13 is provided with a recess 131.

In step S200, an electrode assembly 2 is provided. The electrode assembly 2 has a tab 21.

In step S300, a current collecting member 3 is provided. The current collecting member 3 is provided with a protrusion 31.

In step S400, the current collecting member 3 is connected to the tab 21 of the electrode assembly 2.

In step S500, the current collecting member 3 and the electrode assembly 2 are accommodated in the shell 1.

In step S600, at least a part of the protrusion 31 on the current collecting member 3 is accommodated in the recess 131 on the wall portion 13 to position the current collecting member 3.

In the first direction Z, the current collecting member 3 is located on a side of the electrode assembly 2 facing the wall portion 13, and the protrusion 31 is arranged on a side of the current collecting member 3 facing the wall portion 13.

In the above method, the order of step S100, step S200 and step S300 is not limited. For example, step S100 may be executed first, then step S200, and then step S300; or step S300 may be executed first, then step S200, and then step S100.

It should be noted that, for the related structures of the battery cell 10 manufactured by the manufacturing method provided by the above embodiment, reference may be made to the battery cell 10 provided by each of the above embodiments, and details will not be described herein again.

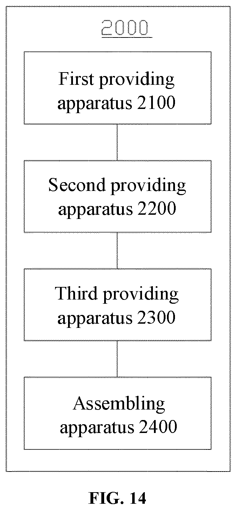

Referring to Fig. 14, Fig. 14 is a schematic block diagram of a device 2000 for manufacturing a battery cell 10 according to some embodiments of the present application. An embodiment of the present application also provides a device 2000 for manufacturing a battery cell 10. The manufacturing device 2000 includes a first providing apparatus 2100, a second providing apparatus 2200, a third providing apparatus 2300 and an assembling apparatus 2400.

The first providing apparatus 2100 is configured to provide a shell 1. The shell 1 has a wall portion 13 located at one end of the shell 1 in the first direction Z. The wall portion 13 is provided with a recess 131. The second providing apparatus 2200 is configured to provide an electrode assembly 2. The electrode assembly 2 has a tab 21. The third providing apparatus 2300 is configured to provide a current collecting member 3. The current collecting member 3 is provided with a protrusion 31. The assembling apparatus 2400 is configured to connect the current collecting member 3 to the tab 21; the assembling apparatus 2400 is further configured to accommodate the current collecting member 3 and the electrode assembly 2 in the shell 1; and the assembling apparatus 2400 is further configured to accommodate at least a part of the protrusion 31 in the recess 131 to position the current collecting member 3.

In the first direction Z, the current collecting member 3 is located on a side of the electrode assembly 2 facing the wall portion 13, and the protrusion 31 is arranged on a side of the current collecting member 3 facing the wall portion 13.

It should be noted that, for the related structures of the battery cell 10 manufactured by the manufacturing device 2000 provided by the above embodiment, reference may be made to the battery cell 10 provided by each of the above embodiments, and details will not be described herein again.

It should be noted that the embodiments in the present application and the features of the embodiments can be combined with each other without conflict.

The above embodiments are only used for illustrating the technical solutions of the present application, and are not intended to limit the present application. For those skilled in the art, the present application may have various modifications and changes. Any modifications, equivalent substitutions, improvements, etc. made within the spirit and principles of the present application shall fall into the scope of protection of the present application.

## Claims

1. A battery cell, comprising:
a shell having a wall portion located at one end of the shell in a first direction;
an electrode assembly accommodated in the shell and provided with a tab; and
a current collecting member accommodated in the shell and located on a side of the electrode assembly facing the wall portion in the first direction, the current collecting member being configured to be connected to the wall portion and the tab to implement an electrical connection between the wall portion and the tab;
wherein a protrusion is provided on a side of the current collecting member facing the wall portion, and the wall portion is provided with a recess configured to accommodate at least a part of the protrusion to position the current collecting member.

2. The battery cell according to claim 1, wherein the recess is a through hole penetrating the wall portion in the first direction.

3. The battery cell according to claim 2, wherein the protrusion is welded to the wall portion.

4. The battery cell according to claim 3, wherein the protrusion has an outer peripheral face facing a hole wall of the through hole, and a weld seam is formed between the outer peripheral face and the hole wall; and
a weld mark formed by welding the protrusion to the wall portion covers the weld seam, and extends circumferentially along the weld seam.

5. The battery cell according to claim 4, wherein the wall portion has an outer surface facing away from the current collecting member in the first direction, and the through hole penetrates the outer surface; and
an end face at one end of the protrusion facing away from the current collecting member is flush with the outer surface; or the end face at the end of the protrusion facing away from the current collecting member is closer to the electrode assembly than the outer surface.

6. The battery cell according to claim 4 or 5, wherein the wall portion has an inner surface facing the current collecting member in the first direction, the through hole penetrates the inner surface, and the current collecting member abuts against the inner surface.

7. The battery cell according to claim 2 or 3, wherein the protrusion comprises:
an extension portion extending from the current collecting member into the through hole in the first direction; and
a limiting portion connected to the extension portion, wherein a limiting gap is formed between the limiting portion and the current collecting member in the first direction, and is configured to accommodate at least a part of the wall portion to limit a movement of the current collecting member relative to the wall portion in the first direction.

8. The battery cell according to claim 7, wherein the protrusion comprises a plurality of limiting portions, which are distributed on the extension portion in a circumferential direction of the extension portion.

9. The battery cell according to claim 7 or 8, wherein the limiting portion is turnably connected to the extension portion, and the limiting portion is capable of being turned outwardly relative to the extension portion, such that the limiting gap is formed between the limiting portion and the current collecting member.

10. The battery cell according to claim 9, wherein a notch is formed at a connection position between the limiting portion and the extension portion to allow the limiting portion to be turned outwardly relative to the extension portion.

11. The battery cell according to any one of claims 7-10, wherein the limiting portion is welded to the wall portion.

12. The battery cell according to any one of claims 7-11, wherein the battery cell further comprises:
a sealing member configured to seal the protrusion and the wall portion.

13. The battery cell according to claim 12, wherein the sealing member comprises:
a first sealing portion sleeving the extension portion and located in the through hole.

14. The battery cell according to claim 13, wherein the sealing member further comprises:
a second sealing portion connected to the first sealing portion and extending in a circumferential direction of the first sealing portion, wherein the second sealing portion is at least partially located between the current collecting member and the wall portion in the first direction.

15. The battery cell according to claim 13 or 14, wherein the sealing member further comprises:
a third sealing portion connected to the first sealing portion and extending in a circumferential direction of the first sealing portion, wherein the third sealing portion is at least partially located between the limiting portion and the wall portion in the first direction.

16. The battery cell according to claim 15, wherein the limiting portion comprises:
a covering section connected to the extension portion, the covering section covering the third sealing portion in the first direction; and
a connecting section connected to an end of the covering section facing away from the extension portion in a second direction, the connecting section as a whole extending beyond the third sealing portion, and the second direction being perpendicular to the first direction;
wherein the connecting section abuts against the wall portion in the first direction.

17. The battery cell according to any one of claims 1-16, wherein the wall portion has a first pressure relief region, the current collecting member has a second pressure relief region, and the first pressure relief region and the second pressure relief region are configured to be opened when the pressure or temperature inside the battery cell reaches a threshold to relieve the pressure inside the battery cell;
wherein the first pressure relief region and the second pressure relief region are arranged opposite to each other in the first direction.

18. The battery cell according to claim 17, wherein the recess is arranged in the first pressure relief region, and the protrusion is arranged in the second pressure relief region.

19. The battery cell according to claim 17 or 18, wherein a pressure relief area of the first pressure relief region is greater than a pressure relief area of the second pressure relief region.

20. The battery cell according to any one of claims 17-19, wherein the wall portion is provided with a first pressure relief groove which extends in a circumferential direction of the shell to define the first pressure relief region; and
the current collecting member is provided with a second pressure relief groove which extends in the circumferential direction of the shell to define the second pressure relief region.

21. The battery cell according to claim 20, wherein the first pressure relief groove and the second pressure relief groove are both circular grooves, and are coaxially arranged, and the diameter of the first pressure relief groove is greater than the diameter of the second pressure relief groove.

22. The battery cell according to claim 20 or 21, wherein the wall portion is provided with a plurality of third pressure relief grooves which are distributed at intervals around the first pressure relief region, the third pressure relief grooves being connected to the first pressure relief groove, and a third pressure relief region being formed between each two adj acent third pressure relief grooves in the circumferential direction of the shell.

23. The battery cell according to claim 22, wherein the current collecting member is provided with a plurality of fourth pressure relief grooves which are distributed at intervals around the second pressure relief region, the fourth pressure relief grooves being connected to the second pressure relief groove, and a fourth pressure relief region being formed between each two adjacent fourth pressure relief grooves in the circumferential direction of the shell;
wherein the fourth pressure relief region and the third pressure relief region are arranged opposite to each other in the first direction.

24. A battery, comprising:
the battery cell of any one of claims 1-23; and
a box configured to accommodate the battery cell.

25. An electrical device, comprising the battery of claim 24.

26. A method for manufacturing a battery cell, the manufacturing method comprising:
providing a shell having a wall portion located at one end of the shell in a first direction, the wall portion being provided with a recess;
providing an electrode assembly having a tab;
providing a current collecting member provided with a protrusion;
connecting the current collecting member to the tab;
accommodating the current collecting member and the electrode assembly in the shell; and
accommodating at least a part of the protrusion in the recess to position the current collecting member;
wherein in the first direction, the current collecting member is located on a side of the electrode assembly facing the wall portion, and the protrusion is arranged on a side of the current collecting member facing the wall portion.

27. A device for manufacturing a battery cell, the manufacturing device comprising:
a first providing apparatus configured to provide a shell having a wall portion located at one end of the shell in a first direction, the wall portion being provided with a recess;
a second providing apparatus configured to provide an electrode assembly having a tab;
a third providing apparatus configured to provide a current collecting member provided with a protrusion; and
an assembling apparatus configured to connect the current collecting member to the tab, further to accommodate the current collecting member and the electrode assembly in the shell, and further to accommodate at least a part of the protrusion in the recess to position the current collecting member;
wherein in the first direction, the current collecting member is located on a side of the electrode assembly facing the wall portion, and the protrusion is arranged on a side of the current collecting member facing the wall portion.
